# FASCICULE DE BREVET EUROPEEN

(11) **EP 1 414 875 B1**
(45) Date de publication et mention de la délivrance du brevet: **03.09.2008**
(21) Numéro de dépôt: 02770029.3
(22) Date de dépôt: 16.07.2002
(51) Int. Cl.: C08F 210/02, C10L 1/18, C10L 1/22

(54) **POLYMERES A BASE D'OLEFINE ET D'ALKYLATE D'ALKENYLE ET LEUR UTILISATION COMME ADDITIF MULTIFONCTIONNEL DANS LES CARBURANTS ET LES COMBUSTIBLES**
POLYMERE AUS OLEFINEN UND ALKENYLALKYLATEN UND IHRE VERWENDUNG ALS MULTIFUNKTIONELLE KRAFT- UND BRENNSTOFFZUSÄTZE
OLEFIN AND ALKENYL ALKYLATE POLYMERS AND THEIR USE AS MULTIFUNCTIONAL ADDITIVE IN FUELS AND GASOLINE

(30) Priorité: 17.07.2001 FR 0109535
(43) Date de publication de la demande: 06.05.2004
(73) Titulaire: Total France, 92800 Puteaux (FR)
(72) Inventeur: EYDOUX, Frank, 69440 Saint Laurent D'Agny (FR); GERMANAUD, Laurent, F-38540 Heyrieux (FR); MARIE, Emmanuelle, F-69100 Villeurbanne (FR)
(74) Mandataire: Hirsch & Associés
(86) Numéro de dépôt international: PCT/FR2002/002521
(87) Numéro de publication internationale: WO 2003/008471

(56) Documents cités:
- EP-A- 0 890 589
- EP-A- 0 926 168
- EP-A- 1 090 933
- DE-A- 19 645 603
- US-A- 4 802 892
- US-A- 5 200 484
- US-A- 5 254 652
- US-A- 5 747 616
- US-A- 6 106 584

## Description

La présente invention concerne des nouveaux polymères à base d'oléfine et d'alkylate d'alkényle et leur utilisation comme additif multifonctionnel d'opérabilité à froid dans les carburants et les combustibles, ainsi que les compositions contenant ces polymères.

On connaît déjà de nombreux additifs de tenue à froid à base de copolymère éthylène/acétate de vinyle (EVA). Ces additifs de tenue à froid permettent d'abaisser la température limite de filtrabilité (TLF) et le point d'écoulement (PTE) des produits pétroliers à base de distillats moyens, tels que notamment les gazoles. Les documents ci-après fournissent une illustration de tels additifs.

WO-A-9111488 décrit des additifs comprenant un mélange d'un premier polymère d'éthylène et d'alpha-oléfine et d'un second composé choisi notamment parmi les polymères dits en peigne et les composés azotés polaires.

EP-A-0187488 décrit des compositions comprenant un mélange d'un polymère de type EVA, d'une fraction hydrocarbonée amorphe, solide à l'ambiante, sensiblement saturée et exempte de n-paraffines, et d'un éther.

US-A-3961916 décrit des additifs obtenus par mélange de polymères de type EVA, le premier étant du type nucléant des paraffines et le second du type inhibiteur de croissance des paraffines.

FR-A-2249946 décrit un additif comprenant un polymère comportant un groupe ester à chaîne latérale ayant de 18 à 44 atomes de carbone. Ce polymère améliore la température d'écoulement du carburant.

Il est également d'usage d'employer, dans les carburants et les combustibles, des additifs anti-sédimentation dont la fonction est d'empêcher la précipitation, à basse température, des paraffines longues présentes dans les coupes d'hydrocarbures. Les documents ci-après fournissent une illustration de tels additifs.

EP-A-0261958 et EP-A-0261959 décrivent des additifs améliorant les propriétés à froid, qui présentent des substituants à des positions stériques déterminées, et ayant au moins 10 atomes de carbone dans leur chaîne. Ces additifs permettent de limiter la dimension particulaire moyenne des cristaux de paraffine à une valeur inférieure à 4000 nm.

EP-A-0316108 décrit un additif anti-sédimentation comprenant un sel d'amine ou de diamine d'acide sulfosuccinique, son ester ou diester, son amide ou diamide ou son ester-amide.

De façon générale, on connaît des additifs d'anti-sédimentation choisis dans le groupe constitué par les copolymères acide (méth)acrylique/(méth)acrylate d'alkyle amidifié par une polyamine, les alkénylsuccinimides de polyamine, les dérivés d'acide phtalamique et d'amine grasse à double chaîne. Des exemples de tels additifs sont donnés dans les documents suivants : EP-A-0261959, EP-A-00593331, EP-A-0674689, EP-A-0327423, EP-A-0512889, EP-A-0832172.

Pour améliorer à la fois les propriétés de tenue à froid et d'antisédimentation des carburants ou des combustibles, une première solution consiste à utiliser simultanément les deux catégories d'additifs. Ainsi le brevet EP-A-0061894 propose d'améliorer les propriétés d'un carburant à base de distillat par incorporation d'un additif d'antisédimentation constitué d'un composé comprenant une chaîne linéaire grasse, choisi parmi les sels d'ammoniums ou amides d'acides polycarboxyliques aromatiques ou cycloaliphatiques, leurs esters ou anhydrides, ainsi que d'un additif de tenue à froid constitué de composés du type des EVA.

Toutefois, l'utilisation simultanée de ces deux catégories d'additifs s'avère problématique, dans la mesure où ils présentent un effet "anti-synergique": la présence des additifs de tenue à froid dégrade les performances des additifs antisédimentation. Plus précisément, les cristaux de paraffines qui se forment à basse température en présence d'additifs d'opérabilité à froid sont plus compacts et plus denses. Ces cristaux sédimentent au fond des réservoirs ce qui pose d'importants problèmes lors du stockage et de l'utilisation du carburant ou du combustible. On recherche donc des additifs qui permettent de remédier aux inconvénients précités, et qui soient à la fois des additifs de tenue à froid et d'anti-sédimentation.

L'invention vise donc à fournir un additif multifonctionnel qui permette d'améliorer à la fois la tenue à froid (TLF et PTE) ainsi que l'anti-sédimentation, destiné notamment aux combustibles et/ou carburants.

L'invention a pour objet des polymères à base d'oléfine et d'alkylate d'alkényle.

Ainsi, l'invention fournit un polymère à base d'oléfine et d'alkylate d'alkényle, de poids moléculaire compris entre 500 et 25000 g.mol⁻¹ inclus et comprenant au moins un motif de formule (I) ci-après : 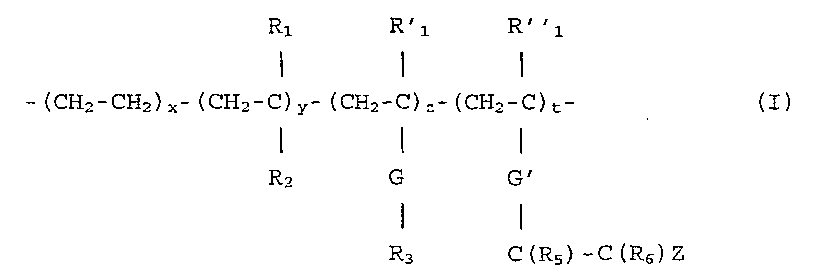 dans laquelle
R₁, R'₁, et R''₁, identiques ou différents, sont choisis parmi l'hydrogène et les radicaux alkyles comprenant de 1 à 10 atomes de carbone ;
R₂ est choisi parmi l'hydrogène, les radicaux alkyles comprenant de 1 à 20 atomes de carbone, les radicaux aromatiques ayant de 6 à 10 atomes de carbone, le groupement OR'₂, R'₂ étant l'hydrogène ou un groupe alkyle comprenant de 1 à 6 atomes de carbone, étant entendu que R₁ et R₂ ne peuvent représenter en même temps un atome d'hydrogène ;
G et G', identiques ou différents, sont choisis parmi les groupes carbonylés

-O-C(O)- ; -C(O)-O- ; -C(O)- ;

R₃ est choisi parmi les radicaux alkyles comprenant de 1 à 13 atomes de carbone ;
R₅ et R₆, identiques ou différents, sont choisis parmi l'hydrogène, les radicaux alkyles comprenant de 1 à 13 atomes de carbone, ou ensemble forment une double liaison avec les deux atomes de carbone auxquels ils sont liés, ou ensemble forment un cycle saturé ou insaturé ou un cycle aromatique ayant de 6 à 10 atomes de carbone, cycle éventuellement substitué par 1 à 3 groupe(s) ayant la même définition que Z autre que hydrogène ;
et Z représente l'hydrogène ; NO₂ ; NR₂, CONR₂, COO⁻⁺NH₂R₂ avec chaque R représentant indépendemment un radical alkyle comprenant de 1 à 24 atomes de carbone ; COOR avec R ayant la signification ci-avant ; étant entendu que lorsque Z représente l'hydrogène alors R₅ et R₆ ensemble forment un cycle saturé ou insaturé ou aromatique, éventuellement substitué ;
x, y, z et t correspondant à des rapports molaires tels que :
la somme x+y varie de 0,60 à 0,98, x ou y pouvant être nul,
z varie de 0,004 à 0,38, et
t est tel que 0,02 < t/z < 4.

Selon un mode de réalisation, le polymère comprend au moins un motif de formule (II) ci-après : 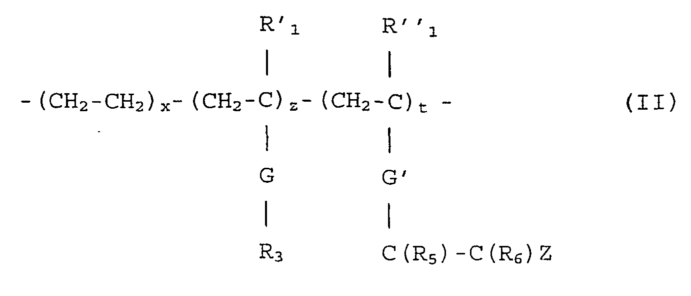 dans laquelle x varie de 0,6 à 0,90 et 0,02 < t/z < 4.

Selon un mode de réalisation, dans le polymère, le groupe G correspond à -O-C(O)- , et R₃ est choisi dans le groupe constitué par CH₃, C₂H₅, C₃H₇ et les groupements 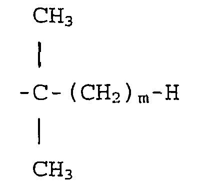 dans lesquels m varie de 1 à 10 et de préférence de 1 à 7.

Selon un mode de réalisation, dans le polymère, R₅ et R₆, ensemble, forment un cycle saturé ou insaturé.

Selon un mode de réalisation, dans le polymère, le groupe G' correspond à -O-C(O)- ,et R₅ et R₆, ensemble forment un cycle saturé ou insaturé, de préférence un cycle aromatique.

Selon un mode de réalisation, dans le polymère, le groupe G' correspond à -O-C(O)- , et Z représente CONR₂ ou COO⁻⁺NH₂R₂ avec chaque R représentant indépendamment un radical alkyle comprenant de 2 à 20 atomes de carbone.

Les radicaux alkyle peuvent être linéaires ou ramifiés. On peut citer les radicaux suivants, dans l'ordre croissant du nombre d'atomes de carbone: méthyle, éthyle, isopropyle, n-propyle, n-, iso- et tert-butyle, n-pentyle, iso-pentyle, néo-pentyle, n-hexyle, méthyl-4-pentènyle, octyle, 2-éthylhexyl, ter-octyle, nonyle, iso-nonyle, néononyle, décyle, isodécyle, néodécyle, undécyle, néoundécyle, dodécyle, iso-dodécyle, néododécyle, tétradécyle, octadécyle.

De préférence R''₁ est l'hydrogène et G-R₃ est choisi dans le groupe comprenant les radicaux acétate, propionate, butyrate, isobutyrate, pivalate, pentanoate, 2-éthylhexanoate, octanoate, nonanoate, isononanoate, néononanoate, décanoate, isodécanoate, néodécanoate, undécanoate, néoundécanoate, dodécanoate, isododécanoate, néododécanoate, avantageusement acétate et propionate.

L'invention fournit aussi des procédés de préparation de nouveaux polymères, leur utilisation comme additif multifonctionnel et des compositions comprenant ces nouveaux polymères.

L'invention est maintenant décrite plus en détails dans la description qui suit.

### Polymères selon l'invention.

Ainsi qu'il a été déjà indiqué, l'invention fournit des polymères à base d'oléfine, notamment éthylène, et d'alkylate d'alkényle.

Des mélanges de polymères sont aussi possibles ; ils peuvent être obtenus par mélange de polymères distincts ou par mélange de monomères distincts.

Le poids moléculaire des polymères selon l'invention varie de 500 à 25000 g.mol⁻¹ inclus, de préférence 1000 à 15000 g.mol⁻¹ inclus.

D'autres monomères peuvent aussi être présents en des quantités faibles n'affectant pas les propriétés fondamentales des polymères selon l'invention.

On préférera les polymères dans lesquels y est nul (éthylène comme seul monomère oléfinique).

### Procédé de préparation des polymères.

Les polymères peuvent être préparés par les procédés classiques connus dans l'art, ainsi que par de nouveaux procédés objet de l'invention.

Un premier procédé de préparation consiste en une polymérisation radicalaire des monomères de départ selon les rapports molaires appropriés.

Les monomères de départ sont polymérisés en présence d'initiateurs classiques, tels qu'oxygène, peroxides, hydroperoxides, ou composés azo. De tels initiateurs sont par exemple décrits dans "Ullmann's Encyclopedia of Industrial Chemistry", 4th ed., vol. 19, pp169-178. La réaction est mise en oeuvre en général sous des pressions de 50 à 700 MPa, de préférence 150 à 300 MPa, à des températures de 100 à 350°C, de préférence 120 à 325°C. Le poids moléculaire est ajusté en fonction des conditions opératoires et des rapports molaires des monomères de départ. Des régulateurs de masse moléculaire peuvent aussi être utilisés. Les différentes vitesses de polymérisation, si tel est le cas, sont prises en compte pour la détermination des rapports molaires de départ (par exemple la teneur en ester vinylique sera supérieure dans le mélange de départ, par rapport à la valeur finale recherchée dans le polymère). La polymérisation peut être mise en oeuvre dans un réacteur haute pression classique, tel qu'un autoclave, un réacteur tubulaire. Le mélange réactionnel peut contenir des solvants ou non, de préférence le mélange réactionnel est exempt de solvant.

Un tel procédé est décrit par exemple dans le brevet US-A-5254652.

Un second procédé de préparation des polymères selon l'invention comprend deux étapes principales :
- une première étape de préparation d'un polymère fonctionnalisé soit par synthèse directe par polymérisation d'au moins une oléfine et d'au moins un monomère insaturé porteur d'au moins une fonction alcool primaire ou hydroxyle, soit par synthèse indirecte comportant la polymérisation d'au moins une oléfine et d'au moins un ester insaturé hydrolysable suivie d'une hydrolyse partielle desdites fonctions esters afin de libérer des fonctions alcool ou hydroxyle ; et
- une seconde étape d'estérification des fonctions alcools primaires ou hydroxyles du polymère fonctionnalisé obtenu à l'étape précédente par des réactifs appropriés.

Selon un mode de réalisation, ladite seconde étape d'estérification est effectuée par réaction avec un halogénure d'acide.

Selon un autre mode de réalisation, ladite seconde étape d'estérification est effectuée par réaction avec un anhydride d'acide, et éventuellement modification de la fonction acide carboxylique restante.

Selon une variante de ce second mode de réalisation, la réaction avec l'anhydride est mise en oeuvre en présence d'un catalyseur basique.

Dans le cas de la synthèse directe, le monomère insaturé porteur d'au moins une fonction alcool primaire ou hydroxyle est choisi avantageusement parmi l'acrylate ou le méthacrylate d'hydroxyéthyle, ou encore le monoacrylate ou le monométhacrylate d'hydroxy-2-éthyléther et leurs homologues supérieurs, ou encore le hydroxyéthyl-vinyl-éther et les homologues supérieurs. Le polymère fonctionnalisé est obtenu par polymérisation radicalaire, en particulier dans les conditions analogues à celles décrites dans le premier procédé, à partir d'au moins une oléfine et d'au moins un monomère insaturé porteur d'au moins une fonction alcool primaire ou hydroxyle.

Dans le cas de la synthèse indirecte, l'ester insaturé hydrolysable est choisi notamment parmi les dérivés de formule: CH₂-CH(R₁)-O-C(O)-R₃, où R₁ et R₃ ont les significations précédemment indiquées. L'ester insaturé hydrolysable est avantageusement choisi parmi l'acétate de vinyle, le propionate de vinyle, le butyrate de vinyle, l'octanoate de vinyle, l'éthyl-2-hexanoate de vinyle, l'isononanoate de vinyle, le néoundécanoate de vinyle, le néododécanoate de vinyle. L'acétate et le propionate de vinyle sont avantageusement préférés. Comme dans la synthèse directe, au moins une oléfine et au moins un ester insaturé hydrolysable sont polymérisés par voie radicalaire, en particulier dans les conditions analogues à celles décrites dans le premier procédé. Ultérieurement, on procède à une hydrolyse partielle de ce polymère, de 5 à 95%, de préférence de 10 à 50%, des groupes esters, avantageusement des fonctions acétate ou propionate. Cette hydrolyse est effectuée par exemple par une solution basique de soude, de potasse, de soude méthanolique et/ou de potasse méthanolique, la soude méthanolique étant préférée, à une température comprise entre 20 et 110°C, de préférence entre 50 et 70 °C, dans un solvant aprotique, choisi de préférence parmi le tétrahydrofurane et le toluène. Une étape intermédiaire de récupération du produit partiellement hydrolysé est de préférence mise en oeuvre à l'issue de cette première étape ; cette récupération peut se faire par précipitation du produit partiellement hydrolysé au moyen d'un solvant, de préférence du méthanol.

Dans la seconde étape, la fonction hydroxyle est estérifiée par un composé approprié tel qu'un acide carboxylique ou un dérivé d'acide carboxylique (ester, anhydride d'acide carboxylique, chlorure d'acide). Les techniques classiques d'estérification sont appropriées. Selon l'invention, on préférera deux modes particuliers, l'un avec des chlorures d'acide, éventuellement fonctionnalisés, et l'autre avec des anhydrides d'acide cycliques. Ce dernier cas est notamment approprié lorsque la première voie donne des rendements faibles et/ou conduit à de nombreux sous-produits.

Dans le premier cas le chlorure d'acide est mis à réagir dans les conditions classiques de réaction. Les fonctionnalités éventuellement présentes peuvent être aussi transformées si besoin est.

Dans le second cas l'anhydride est mis à réagir dans les conditions classiques de réaction.

De préférence, la réaction d'estérification de l'EVA partiellement hydrolysé se fait en présence d'un catalyseur basique. L'on peut par exemple employer comme catalyseur basique un équivalent de diméthylaminopyridine (DMAP), ou un mélange de celle-ci avec une amine tertiaire type pyridine ou triéthylamine selon des rapports variables dans de larges mesures. La DMAPactive la fonction anhydride, ce qui accélère la réaction. Par ailleurs, la DMAP piège la fonction acide libérée par la réaction, ce qui empêche toute réaction éventuelle de réticulation. Si on utilise un mélange avec une amine tertiaire, celle-ci servira de piège à acide.

La fonction acide libre est alors transformée selon les techniques classiques.

Par exemple, pour l'obtention de la forme ammonium, la simple addition au milieu réactionnel de l'amine correspondante est suffisante.

Par exemple encore, pour l'obtention de la forme amide, la simple addition au milieu réactionnel de l'amine correspondante et d'un activateur classique type diisopropylcarbodiimide (DIP) ou DCC est suffisante. La diisopropylcarbodiimide par exemple active la fonction acide et capte l'eau qui se forme lors de la réaction.

Il convient de noter ici que la réaction avec l'anhydride en présence de DMAP est transposable à des EVOH, i.e. des polymères ne portant que des fonctions hydroxy. Il s'agit d'un autre aspect de l'invention.

Le produit final est recueilli de façon classique par des méthodes connues dans l'art.

### Additif multifonctionnel.

Le polymère selon l'invention est un additif multifonctionnel.

Il améliore la tenue à froid, à savoir la température limite de filtrabilité (TLF) et/ou le point d'écoulement (PTE). Les TLF et PTE sont mesurés conformément aux normes NF EN 116 et NF EN 23015, respectivement.

En tant qu'additif anti-sédimentation, il empêche la sédimentation des cires. L'anti-sédimentation est mesurée conformément à la norme NF 07-085.

L'additif est utile pour les produits à base d'hydrocarbures, en particulier les combustibles (fuel oils domestiques) et les carburants, notamment ceux destinés aux véhicules diesel.

### Composition comprenant le polymère.

L'invention fournit aussi une composition comprenant le polymère selon l'invention.

Ces compositions comprennent comme partie majeure une coupe hydrocarbonée, qui peut être avantageusement choisie dans le groupe constitué par les distillats moyens, les biofuels, les gazoles de synthèse, les carburants émulsionnés à l'eau et/ou aux mélanges eau/alcools ou polyols, et leurs mélanges. Un distillat moyen correspond notamment à une coupe dont le point d'ébullition est compris entre 120 et 450°C, de préférence entre 150 et 400°C. Un biofuel comprend une huile végétale et/ou un (trans)ester d'une huile végétale. Comme biofuel, on utilisera en particulier des esters d'huiles végétales et plus particulièrement l'ester méthylique de colza (EMC). On peut aussi utiliser un gazole de synthèse, tel qu'obtenu par un "process gas-to-liquid" mettant en oeuvre la synthèse de Fischer-Tropsch. Comme mélange, on utilisera avantageusement des mélanges gazole/biofuel contenant jusqu'à 30% en poids de biofuel. Ces diverses coupes hydrocarbonées peuvent être émulsionnées, avec de 5 à 30% en poids d'eau ou d'un mélange eau/alcool ou polyol.

Les compositions selon l'invention comprennent une partie mineure comprenant au moins un polymère selon l'invention.

La composition contient en général au moins 25 ppm, de préférence de 50 à 5000 ppm, avantageusement de 75 à 1000 ppm, du polymère selon l'invention.

L'invention peut en outre contenir un ou plusieurs additif(s) classique(s), présent(s) en des quantités classiques, par exemple jusqu'à 5000 ppm, par rapport à la composition finale. Parmi ces additifs, on peut citer particulièrement:
a) des additifs procétane, notamment (mais non limitativement) choisis parmi les nitrates d'alkyle, de préférence le nitrate de 2-éthylhexyle, les peroxydes d'aroyle, de préférence le peroxyde de benzoyle, et les peroxydes d'alkyle, de préférence le peroxyde de ter-butyle. Avec ces additifs, en particulier les nitrates, on note un effet synergique remarquable. Par exemple, ledit polymère et le nitrate d'alkyle peuvent être présents en des ratios en poids nitrate:polymère compris entre 1:10 et 50:1, de préférence entre 1:1 et 20:1.
b) des additifs de filtrabilité, notamment (mais non limitativement) choisis parmi les copolymères éthylène/acétate de vinyle (EVA), éthylène/propionate de vinyle (EVP), éthylène/éthanoate de vinyle (EVE), éthylène/méthacrylate de méthyle (EMMA), et éthylène/fumarate d'alkyle. Des exemples de tels additifs sont donnés dans les documents suivants: EP-A-0187488, FR-A-2490669, EP-A-0722481, EP-A-0832172.
c) des additifs anti-mousse, notamment (mais non limitativement) choisis parmi les polysiloxanes, les polysiloxanes oxyalkylés, et les amides d'acides gras issus d'huiles végétales ou animales. Des exemples de tels additifs sont donnés dans les documents suivants: EP-A-0861182, EP-A-0663000, EP-A-0736590.
d) des additifs détergents et/ou anti-corrosion, notamment (mais non limitativement) choisis dans le groupe constitué par les amines, les succinimides, les alkénylsuccinimides, les polyalkylamines, les polyalkyles polyamines et les polyétheramines. Des exemples de tels additifs sont donnés dans les documents suivants: EP-A-0938535.
e) des additifs de lubrifiance ou anti-usure, notamment (mais non limitativement) choisis dans le groupe constitué par les acides gras et leurs dérivés ester ou amide, notamment le monooléate de glycérol, et les dérivés d'acides carboxyliques mono- et polycycliques. Des exemples de tels additifs sont donnés dans les documents suivants: EP-A-0680506, EP-A-0860494, WO-A-9804656, EP-A-0915944, FR-A-2772783, FR-A-2772784.
f) des additifs de point de trouble, notamment (mais non limitativement) choisis dans le groupe constitué par les terpolymères oléfine à chaîne longue/ester (méth)acrylique/maléimide, et les dérivés d'esters d'acides fumarique/maléique. Des exemples de tels additifs sont donnés dans les documents suivants: EP-A-0071513, EP-A-0100248, FR-A-2528051, FR-A-2528051, FR-A-2528423, EP-A-0112195, EP-A-0172758, EP-A-0271385, EP-A-0291367.
g) des additifs d'anti-sédimentation, notamment (mais non limitativement) choisis dans le groupe constitué par les copolymères acide (méth)acrylique/(méth)acrylate d'alkyle amidifié par une polyamine, les alkénylsuccinimides de polyamine, les dérivés d'acide phtalamique et d'amine grasse à double chaîne. Des exemples de tels additifs sont donnés dans les documents suivants: EP-A-0261959, EP-A-00593331, EP-A-0674689, EP-A-0327423, EP-A-0512889, EP-A-0832172.

Une composition particulièrement intéressante est celle dans laquelle la coupe hydrocarbonée présente une teneur en soufre inférieure ou égale à 0.2%, de préférence inférieure ou égale à 0.05%, avantageusement inférieure ou égale à 0.01%, en poids par rapport au poids de la composition.

Les compositions selon l'invention peuvent être utilisées notamment en tant que combustible (par exemple en tant que fuel oil domestique) ou en tant que carburant, en particulier en tant que carburant Diesel ou bioDiesel.

Ces compositions sont préparées notamment par mélange de ses constituants.

### Exemples.

Les exemples suivants illustrent l'invention,

### Exemple 1

### Hydrolyse

L'EVA de départ est un EVA, désigné EVA-A, qui est un copolymère d'éthylène et d'acétate de vinyle contenant 30.5% poids d'acétate de vinyle (Mw=10800 et Mn=2400 en équivalent polystyrène).

5 g de cet EVA-A sont dissous dans 30 ml de toluène préalablement séché sur alumine. Cette solution est préchauffée à 60°C sous argon et sous agitation. 1.586 g de NaOH sont dissous dans 20 ml de méthanol anhydre. Cette solution est réalisée dans une fiole jaugée. A l'aide d'une seringue, le volume préalablement choisi de solution de soude est ajouté au polymère. Le mélange réactionnel est maintenu sous argon à 60°C pendant une heure.

Le polymère est alors précipité dans un volume de méthanol environ 20 fois le volume réactionnel, le méthanol contenant une petite quantité d'acide chlorhydrique concentré (destiné à neutraliser la base résiduelle). Après filtration, le polymère est séché sous vide à 60°C pendant 12 heures. Il se présente sous la forme d'une poudre blanche.

Sur le spectre RMN des copolymères ainsi obtenus, on observe la diminution progressive de l'aire du signal correspondant au proton du carbone portant la fonction acétate (vers 4.9ppm) au profit de trois signaux supplémentaires situés entre 3.3 et 4 ppm. Ces derniers correspondent aux carbones porteurs des fonctions alcool.

Le taux d'hydrolyse des fonctions acétates est déterminé par RMN ¹H (intégration du signal CH-OH par rapport au signal CH-OAc). Le tableau ci-dessous permet de relier le volume de solution au taux d'hydrolyse final. En fonction du taux d'hydrolyse recherché, on peut ainsi ajuster le volume de soude à ajouter au mélange réactionnel. La conversion représente la part des fonctions acétate initiales hydrolysées.

**TABLEAU 1**

| Volume ajouté pour 5 g de polymère | Conversion |
|---|---|
| 0.3 | 0.12 |
| 0.5 | 0.21 |
| 1 | 0.4 |
| 1.5 | 0.62 |
| 2.4 | 0.81 |
| 4 | 0.91 |

### Estérification par des anhydrides cycliques

Dans un tricol muni d'une circulation d'argon, d'une agitation magnétique et d'un réfrigérant, 5 g'EVA partiellement hydrolysé sont dissous dans 100 ml de toluène anhydre.

1.2 équivalent (par rapport aux fonction OH) d'anhydride et de DMAP (selon un ratio sensiblement équimolaire) sont dissous dans 30 ml d'acétonitrile anhydre. Cette solution est introduite dans le tricol, le mélange réactionnel est porté à 110°C pendant 48 heures puis refroidi à température ambiante.

La tableau ci-après donne les types et quantités d'anhydride utilisées et les % d'hydrolyse des EVA, de façon à déterminer les différentes quantités à utiliser en fonction du taux d'hydrolyse.

**TABLEAU 2**

| Anhydride | % d'hydrolyse de l'EVA | M anhydride par g d'EVA hydrolysé (g) |
|---|---|---|
| Phtalique | 9 | 0.07 |
| | 29 | 0.238 |
| | 43 | 0.362 |
| | 62 | 0.430 |
| | 65 | 0.543 |
| Succinique | 43 | 0.196 |
| | 62 | 0.291 |
| Tétrahydrophtalique | 43 | 0.297 |
| | 62 | 0.441 |

Pour éliminer la DMAP et régénérer la fonction acide, une résine échangeuse de cations, l'Amberlyst XN1010, est ajoutée dans le tricol. Cette résine porte 3.3 meq de fonctions acide sulfonique par g d résine. Elle est ajoutée en large excès dans le mélange réactionnel ; la suspension est agitée pendant 2 heures, puis la résine est éliminée par filtration. Le toluène est éliminé partiellement sous vide pour conduire à une solution concentrée.

### Modification chimique de la fonction acide libérée

Dans un tricol muni d'une circulation d'argon, d'une agitation magnétique et d'un réfrigérant, un équivalent d'EVA estérifié acide est solubilisé dans 100 ml de toluène anhydre. Un équivalent d'amine est ajouté à cette solution.

Le mélange est maintenu à 70°C pendant 3 heures. Le polymère est alors récupéré classiquement.

Le tableau ci-après donne les amines utilisées.

**TABLEAU 3**

| Anhydride | % d'hydrolyse de l'EVA | Type amine |
|---|---|---|
| Phtalique | 9 | HN(C₁₈H₃₇)₂ |
| | 29 | HN(C₁₈H₃₇)₂ |
| | 43 | HN(C₁₈H₃₇)₂ |
| | 62 | HN(C₁₈H₃₇)₂ |
| | 65 | HN (C₁₈H₃₇)₂ |
| | 45 | H₂NC₁₈H₃₇ |
| | 47 | HN(C₄H₉)₂ |
| Succinique | 43 | HN(C₁₈H₃₇)₂ |
| | 62 | HN(C₁₈H₃₇)₂ |
| Tétrahydrophtalique | 62 | HN(C₁₈H₃₇)₂ |

### Formation des amides

Dans un tricol muni d'une circulation d'argon, d'une agitation magnétique et d'un réfrigérant, un équivalent d'EVA estérifié acide est solubilisé dans 100 ml de toluène anhydre. Un équivalent d'amine est ajouté à cette solution (sauf dans le cas de la diméthylamine qui est un gaz qui est bullé dans la solution). 1.2 équivalent de diisopropylcarbodiimide (DIP) est ajouté au mélange réactionnel.

Le mélange est maintenu à 80°C pendant 48 heures. Le polymère est alors récupéré classiquement.

Le tableau ci-après donne les amines utilisées.

**TABLEAU 4**

| Anhydride | % d'hydrolyse de l'EVA | Type amine |
|---|---|---|
| Phtalique | 43 | HN(C₁₈H₃₇)₂ |
| | 62 | HN(C₁₈H₃₇)₂ |
| | 62 | H₂NC₁₈H₃₇ |
| | 43 | HN(C₄H₉)₂ |
| | 47 | HN(CH₃)₂ |
| Succinique | 43 | HN(C₁₈H₃₇)₂ |
| Tétrahydrophtalique | 43 | HN(C₁₈H₃₇)₂ |

### Estérification par les chlorures d'acide

Dans un tricol muni d'une circulation d'argon, d'une agitation magnétique et d'un réfrigérant, 5 g d'EVA partiellement hydrolysé (taux d'hydrolyse de 53%) sont dissous dans 100 ml de toluène anhydre. Deux équivalents (par rapport aux fonctions alcools) de chlorure d'acide benzoïque, paranitrobenzoïque ou para-diméthylaminobenzoïque et de triéthylamine sont ajoutés au mélange réactionnel.

Le mélange est maintenu à 80-110°C pendant 48 heures. Le polymère est alors récupéré classiquement.

Le dérivé aminobenzoïque est obtenu par hydrogénation du dérivé nitrobenzoïque. Cette hydrogénation se fait sous 30 bars d'hydrogène à 60°C en présence de palladium sur charbon et d'acide formique. Le polymère est ensuite récupéré classiquement.

Le tableau suivant récapitule les dérivés selon l'invention obtenus dans l'exemple.

**TABLEAU 5**

| Polymère | Motif | % d'hydrolyse de l'EVA |
|---|---|---|
| EVA1 | 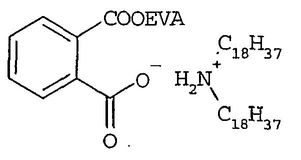 | 9 |
| EVA2 | 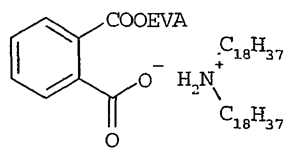 | 29 |
| EVA3 | 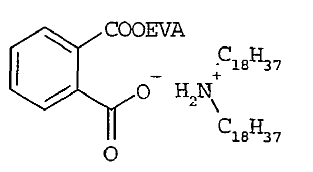 | 43 |
| EVA4 | 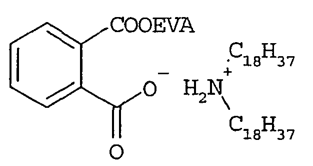 | 62 |
| EVA5 | 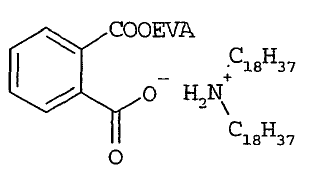 | 65 |
| EVA6 | 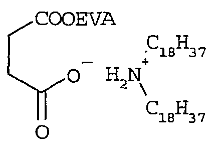 | 43 |
| EVA7 | 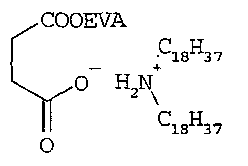 | 62 |
| EVA8 | 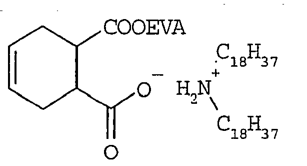 | 62 |
| EVA9 | 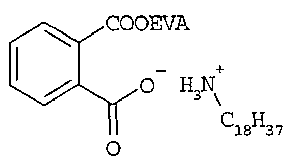 | 45 |
| EVA10 | 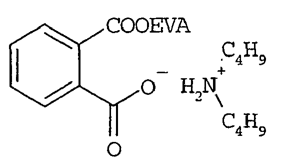 | 47 |
| EVA11 | 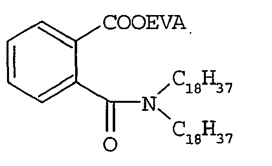 | 43 |
| EVA12 | 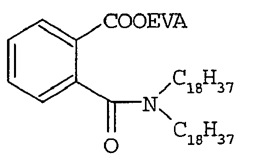 | 60 |
| EVA13 | 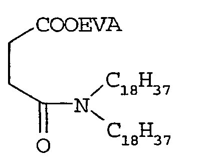 | 43 |
| EVA14 | 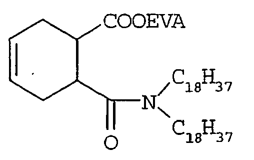 | 43 |
| EVA15 | 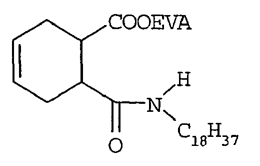 | 62 |
| EVA16 | 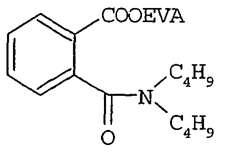 | 41 |
| EVA17 | 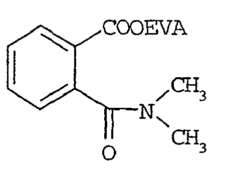 | 47 |
| EVA18 | 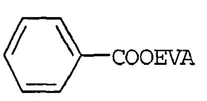 | 37 |
| EVA19 | 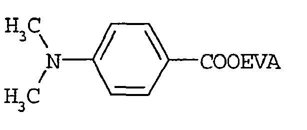 | 53 |
| EVA20 | 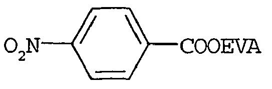 | 53 |
| EVA21 | 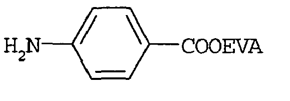 | 53 |

### Exemple 2

### Effet des additifs

On détermine l'efficacité comme additif d'opérabilité à froid (abaissement de la température limite de filtrabilité - TLF- et du point d'écoulement -PTE-) de certains EVA modifiés selon l'invention et de l'EVA-A selon l'art antérieur.

L'additif est mélangé à un gazole comprenant 350 ppm de soufre, et satisfaisant les caractéristiques de la norme EN 590. Ce gazole présente les caractéristiques suivantes: densité NF EN 12185, 0.836 kg/l ; point de trouble NF EN 23015, -8.2°C ; TLF, -5°C ; PTE, -15°C.

On procède aux tests avec un dopage à 300 ppm en additif. Les résultats sont consignés dans le tableau suivant (dans lequel l'EVA-A est utilisé seul). Le gain est donné par rapport à un gazole vierge.

**TABLEAU 6**

| | | | | Sédimentation | | |
|---|---|---|---|---|---|---|
| Additif | TLF (°C) | gain | PTE (°C) | Gain | Temp. de test (°C) | Lecture visuelle |
| EVA-A | -13 | 8 | -27 | 12 | -20 | 148+C |
| EVA1 | -17 | 12 | -33 | 18 | -20 | 110+C |
| EVA2 | -9 | 4 | -33 | 18 | -20 | 128+C |
| EVA3 | -6 | 1 | -30 | 15 | -20 | 176+C |
| EVA4 | -9 | 4 | -27 | 12 | -20 | 244+LT |
| EVA6 | -6 | 1 | -45 | 30 | -20 | 162+C |
| EVA8 | -6 | 1 | -42 | 27 | -18 | 120+C |
| EVA11 | -8 | 3 | -24 | 9 | -20 | 164+C |
| EVA13 | -7 | 2 | -27 | 12 | -20 | 138+C |
| EVA16 | -7 | 2 | -27 | 12 | -20 | 166+C |
| EVA18 | -16 | 11 | -30 | 15 | -18 | 115+C |

Ces résultats montrent que les additifs selon l'invention ont un effet tant sur l'opérabilité à froid que sur la sédimentation.

## Revendications

1. Polymère à base d'oléfine et d'alkylate d'alkényle, de poids moléculaire compris entre 500 et 25000 g.mol⁻¹ inclus et comprenant au moins un motif de formule (I) ci-après : 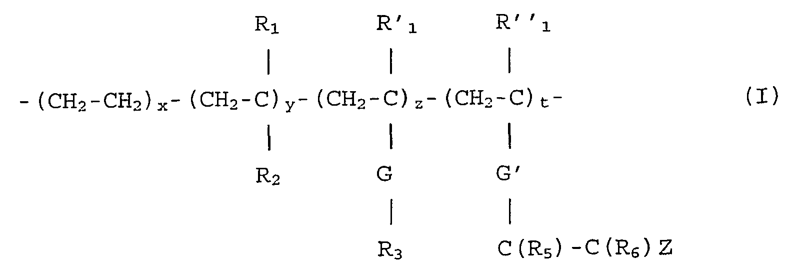 dans laquelle
R₁, R'₁, et R''₁, identiques ou différents, sont choisis parmi l'hydrogène et les radicaux alkyles comprenant de 1 à 10 atomes de carbone ;
R₂ est choisi parmi l'hydrogène, les radicaux alkyles comprenant de 1 à 20 atomes de carbone, les radicaux aromatiques ayant de 6 à 10 atomes de carbone, le groupement OR'₂, R'₂ étant l'hydrogène ou un groupe alkyle comprenant de 1 à 6 atomes de carbone, étant entendu que R₁ et R₂ ne peuvent représenter en même temps un atome d'hydrogène ;
G et G', identiques ou différents, sont choisis parmi les groupes carbonylés
-O-C(O)- ; -C(O)-O- ; -C(O)- ;
R₃ est choisi parmi les radicaux alkyles comprenant de 1 à 13 atomes de carbone ;
R₅ et R₆, identiques ou différents, sont choisis parmi l'hydrogène, les radicaux alkyles comprenant de 1 à 13 atomes de carbone, ou ensemble forment une double liaison avec les deux atomes de carbone auxquels ils sont liés, ou ensemble forment un cycle saturé ou insaturé ou un cycle aromatique ayant de 6 à 10 atomes de carbone, cycle éventuellement substitué par 1 à 3 groupe(s) ayant la même définition que Z autre que hydrogène ;
et Z représente l'hydrogène ; NO₂ ; NR₂, CONR₂, COO⁻⁺NH₂R₂ avec chaque R représentant indépendemment un radical alkyle comprenant de 1 à 24 atomes de carbone ; COOR avec R ayant la signification ci-avant ; étant entendu que lorsque Z représente l'hydrogène alors R₅ et R₆ ensemble forment un cycle saturé ou insaturé ou aromatique, éventuellement substitué ;
x, y, z et t correspondant à des rapports molaires tels que :
la somme x+y varie de 0,60 à 0,98, x ou y pouvant être nul,
z varie de 0,004 à 0,38, et
t est tel que 0,02 < t/z < 4.

2. Polymère selon la revendication 1, comprenant au moins un motif de formule (II) ci-après : 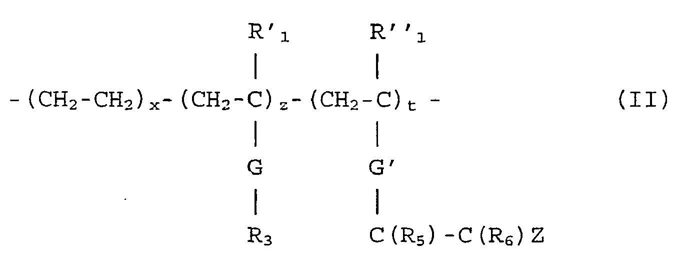 dans laquelle x varie de 0,6 à 0,90 et 0,02 < t/z < 4.

3. Polymère selon la revendication 1 ou 2, dans lequel le groupe G correspond à -O-C(O)- , et dans lequel R₃ est choisi dans le groupe constitué par CH₃, C₂H₅, C₃H₇ et les groupements 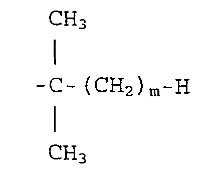 dans lesquels m varie de 1 à 10 et de préférence de 1 à 7.

4. Polymère selon l'une quelconque des revendications 1 à 3, dans lequel R₅ et R₆, ensemble, forment un cycle saturé ou insaturé.

5. Polymère selon l'une quelconque des revendications 1 à 3, dans lequel le groupe G' correspond à -O-C(O)- ,et dans lequel R₅ et R₆, ensemble forment un cycle saturé ou insaturé.

6. Polymère selon la revendication 5, dans lequel R₅ et R₆ ensemble forment un cycle aromatique.

7. Polymère selon l'une quelconque des revendications 1 à 6, dans lequel dans le groupe G' correspond à -O-C(O)-, et dans lequel Z représente CONR₂ ou COO⁻⁺NH₂R₂ avec chaque R représentant indépendamment un radical alkyle comprenant de 2 à 20 atomes de carbone.

8. Polymère selon l'une quelconque des revendications 1 à 7, dans lequel R''₁ est l'hydrogène et dans lequel le groupe - G-R₃ est choisi dans le groupe comprenant les radicaux acétate, propionate, butyrate, isobutyrate, pivalate, pentanoate, 2-éthylhexanoate, octanoate, nonanoate, isononanoate, néononanoate, décanoate, isodécanoate, néodécanoate, undécanoate, néoundécanoate, dodécanoate, isododécanoate, néododécanoate.

9. Polymère selon l'une quelconque des revendications 1 à 8, dans lequel y est nul.

10. Polymère selon l'une quelconque des revendications 1 à 9, de poids moléculaire compris entre 1000 et 15000 g.mol⁻¹ inclus.

11. Procédé de préparation d'un polymère selon l'une quelconque des revendications 1 à 10, comprenant la polymérisation radicalaire des monomères de départ selon les rapports molaires appropriés.

12. Procédé de préparation d'un polymère selon l'une quelconque des revendications 1 à 10, comprenant les deux étapes principales suivantes :
- une première étape de préparation d'un polymère fonctionnalisé soit par synthèse directe par polymérisation d'au moins une oléfine et d'au moins un monomère insaturé porteur d'au moins une fonction alcool primaire ou hydroxyle, soit par synthèse indirecte comportant la polymérisation d'au moins une oléfine et d'au moins un ester insaturé hydrolysable suivie d'une hydrolyse partielle desdites fonctions esters afin de libérer des fonctions alcool ou hydroxyle ; et
- une seconde étape d'estérification des fonctions alcools primaires ou hydroxyles du polymère fonctionnalisé obtenu à l'étape précédente par des réactifs appropriés.

13. Procédé selon la revendication 12, dans lequel ladite seconde étape d'estérification est effectuée par réaction avec un halogénure d'acide.

14. Procédé selon la revendication 12, dans lequel ladite seconde étape d'estérification est effectuée par réaction avec un anhydride d'acide, et éventuellement modification de la fonction acide carboxylique restante.

15. Procédé selon la revendication 14, dans lequel la réaction avec l'anhydride est mise en oeuvre en présence d'un catalyseur basique.

16. Utilisation d'un polymère selon l'une quelconque des revendications 1 à 10, comme additif multifonctionnel de tenue à froid et d'antisédimentation d'hydrocarbures.

17. Composition comprenant une partie majeure d'au moins une coupe hydrocarbonée en particulier du groupe constitué par les distillats moyens, les biofuels, les gazoles de synthèse, les carburants émulsionnés à l'eau et/ou aux mélanges eau/alcools ou polyols, et leurs mélanges, et une partie mineure comprenant au moins un polymère selon l'une quelconque des revendications 1 à 10.

18. Composition selon la revendication 17, **caractérisée en ce qu'**elle contient au moins 25 ppm, de préférence de 50 à 5000 ppm, avantageusement de 75 à 1000ppm, dudit polymère.

19. Composition selon l'une quelconque des revendications 17 à 18, **caractérisé en ce qu'**elle contient en outre au moins un additif de filtrabilité choisi parmi les polymères éthylène/acétate de vinyle (EVA), éthylène/propionate de vinyle (EVP), éthylène/éthanoate de vinyle (EVE), éthylène/méthacrylate de méthyle (EMMA), et éthylène/fumarate d'alkyle.

20. Composition selon l'une quelconque des revendications 17 à 19, **caractérisé en ce qu'**elle contient en outre au moins un additif anti-mousse choisi parmi les polysiloxanes, les polysiloxanes oxyalkylés et les amides d'acides gras issus d'huiles végétales ou animales.

21. Composition selon l'une quelconque des revendications 17 à 20, **caractérisé en ce qu'**elle contient en outre au moins un additif détergent choisi dans le groupe constitué par les amines, les succinimides, les alkénylsuccinimides, les polyalkylamines, les polyalkyls polyamines et les polyétheramines.

22. Composition selon l'une quelconque des revendications 17 à 21, **caractérisé en ce qu'**elle contient en outre au moins un additif de lubrifiance ou anti-usure choisi dans le groupe constitué par les acides gras et leurs dérivés ester ou amide, notamment le monooléate de glycérol, et les dérivés d'acides carboxyliques mono- et polycycliques.

23. Composition selon l'une quelconque des revendications 17 à 22, **caractérisé en ce qu'**elle contient en outre au moins un additif de point de trouble choisi dans le groupe constitué par les terpolymères oléfine à chaîne longue/ester (méth)acrylique/maléimide, et les dérivés d'esters d'acides fumarique/maléique.

24. Composition selon l'une quelconque des revendications 17 à 23, **caractérisé en ce que** elle contient en outre au moins un additif d'anti-sédimentation choisi dans le groupe constitué par les copolymères acide (méth)acrylique/(méth)acrylate d'alkyle amidifié par une polyamine, les alkénylsuccinimides de polyamine, les dérivés d'acide phtalamique et d'amine grasse à double chaîne.

25. Composition selon l'une quelconque des revendications 17 à 24, dans laquelle la coupe hydrocarbonée présente une teneur en soufre inférieure ou égale à 0.2%, de préférence inférieure ou égale à 0.05%, avantageusement inférieure ou égale à 0.01%, en poids par rapport au poids de la composition.

26. Composition selon l'une quelconque des revendications 17 à 25, qui est un combustible ou un carburant.

27. Procédé de fabrication d'une composition selon l'une quelconque des revendications 17 à 26, par mélange de ses constituants.

## Claims

1. Polymer based on olefin and alkenyl alkylate of molecular weight of between 500 and 25,000 g.mol⁻¹ inclusive and comprising at least one unit of the following formula (I) 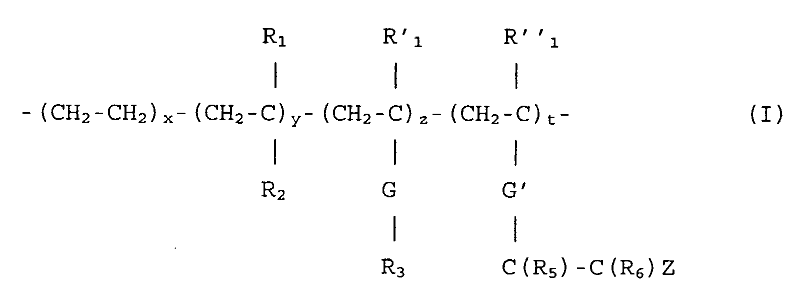 in which
R₁, R'₁ and R"₁ are identical or different and are chosen from hydrogen and alkyl radicals having 1 to 10 carbon atoms;
R₂ is chosen from hydrogen, alkyl radicals having 1 to 20 carbon atoms, aromatic radicals having 6 to 10 carbon atoms, the grouping OR'₂, R'₂ being hydrogen or an alkyl group having 1 to 6 carbon atoms, it being understood that R₁ and R₂ cannot simultaneously represent a hydrogen atom;
G and G' are identical or different and are chosen from the carbonyl groups
-O-C(O)-; -C(O)-O-; -C(O)-;
R₃ is chosen from alkyl radicals having 1 to 13 carbon atoms;
R₅ and R₆ are identical or different and are chosen from hydrogen and alkyl radicals having 1 to 13 carbon atoms, or together form a double bond with the two carbon atoms to which they are bonded, or together form a saturated or unsaturated ring or an aromatic ring having 6 to 10 carbon atoms, the ring optionally being substituted by 1 to 3 group(s) having the same definition as Z other than hydrogen;
and Z represents hydrogen; NO₂; NR₂, CONR₂, COO⁻⁺NE₂R₂, where each R independently represents an alkyl radical having 1 to 24 carbon atoms; COOR, where R has the above meaning; it being understood that if Z represents hydrogen then R₅ and R₆ together form an optionally substituted saturated or unsaturated or aromatic ring;
x, y, z and t corresponding to molar ratios such that:
the sum x+y varies from 0.60 to 0.98, it being possible for x or y to be zero,
z varies from 0.004 to 0.38 and
t is such that 0.02 < t/z < 4.

2. Polymer according to claim 1, comprising at least one unit of the following formula (II): 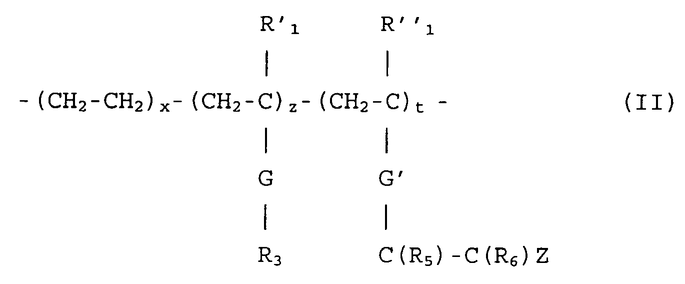 in which x varies from 0.6 to 0.90 and 0.02 < t/z < 4.

3. Polymer according to claim 1 or 2, in which the group C corresponds to -O-C(O)-, and in which R₃ is chosen from the group consisting of CH₃, C₂H₅, C₃H₇ and the groupings 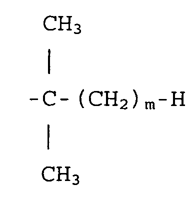 in which m varies from 1 to 10, and preferably from 1 to 7.

4. Polymer according to any one of claims 1 to 3, in which R₅ and R₆ together form a saturated or unsaturated ring.

5. Polymer according to any one of claims 1 to 3, in which the group G' corresponds to -O-C(O)-, and in which R₅ and R₆ together form a saturated or unsaturated ring.

6. Polymer according to claim 5, in which R₅ and R₆ together form an aromatic ring.

7. Polymer according to any one of claims 1 to 6, in which the group G' corresponds to -O-C(O)-, and in which Z represents CONR₂ or COO⁻⁺NB₂R₂, where each R independently represents an alkyl radical having 2 to 20 carbon atoms.

8. Polymer according to any one of claims 1 to 7, in which R"₁ is hydrogen and in which the group -G-R₃ is chosen from the group consisting of acetate, propionate, butyrate, isobutyrate, pivalate, pentanoate, 2-ethylhexanoate, octanoate, nonanoate, isononanoate, neononanoate, decanoate, isodecanoate, neodecanoate, undecanoate, neoundecanoate, dodecanoate, isododecanoate and neododecanoate radicals.

9. Polymer according to any one of claims 1 to 8, in which y is zero.

10. Polymer according to any one of claims 1 to 9 of molecular weight of between 1,000 and 15,000 g.mol⁻¹.

11. Process for the preparation of a polymer according to any one of claims 1 to 10, comprising free-radical polymerization of the starting monomers according to appropriate molar ratios.

12. Process for the preparation of a polymer according to any one of claims 1 to 10, comprising the following two main stages:
- a first stage of preparation of a functionalized polymer either by direct synthesis by polymerization of at least one olefin and at least one unsaturated monomer which carries at least one primary alcohol or hydroxyl function, or by indirect synthesis comprising polymerization of at least one olefin and at least one hydrolysable unsaturated ester, followed by a partial hydrolysis of the said ester functions in order to liberate alcohol or hydroxyl functions; and
- a second stage of esterification of the primary alcohol or hydroxyl functions of the functionalized polymer obtained in the preceding stage by suitable reagents.

13. Process according to claim 12, in which the said second stage of esterification is carried out by reaction with an acid halide.

14. Process according to claim 12, in which the said second stage of esterification is carried out by reaction with an acid anhydride, and optionally modification of the remaining carboxylic acid function.

15. Process according to claim 14, in which the reaction with the anhydride is carried out in the presence of a basic catalyst.

16. Use of a polymer according to any one of claims 1 to 10 as a multifunctional additive for cold flow properties and antisedimentation of hydrocarbons.

17. Composition comprising a major portion of at least one hydrocarbon cut, in particular from the group consisting of middle distillates, biofuels, synthetic gas oils, fuels emulsified in water and/or mixtures of water/alcohols or polyols, and their mixtures, and a minor portion comprising at least one polymer according to any one of claims 1 to 10.

18. Composition according to claim 17, **characterized in that** it comprises at least 25 ppm, preferably 50 to 5,000 ppm, advantageously 75 to 1,000 ppm of the said polymer.

19. Composition according to any one of claims 17 to 18, **characterized in that** it also comprises at least one filterability additive chosen from ethylene/vinyl acetate (EVA), ethylene/vinyl propionate (EVP), ethylene/vinyl ethanoate (EVE), ethylene/methyl methacrylate (EMMA) and ethylene/alkyl fumarate polymers.

20. Composition according to any one of claims 17 to 19, **characterized in that** it also comprises at least one antifoam additive chosen from polysiloxanes, oxyalkylated polysiloxanes and fatty acid amides from vegetable or animal oils.

21. Composition according to any one of claims 17 to 20, **characterized in that** it also comprises at least one detergent additive chosen from the group consisting of amines, succinimides, alkenylsuccinimides, polyalkylamines, polyalkylpoly-amines and polyether-amines.

22. Composition according to any one of claims 17 to 21, **characterized in that** it also comprises at least one lubricating or antiabrasion additive chosen from the group consisting of fatty acids and their ester or amide derivatives, in particular glycerol monooleate, and derivatives of mono- and polycyclic carboxylic acids.

23. Composition according to any one of claims 17 to 22, **characterized in that** it also comprises at least one cloud point additive chosen from the group consisting of long-chain olefin/(meth)acrylic ester/maleimide terpolymers and derivatives of fumaric/maleic acid esters.

24. Composition according to any one of claims 17 to 23, **characterized in that** it also comprises at least one antisedimentation additive chosen from the group consisting of copolymers of (meth)acrylic acid/alkyl (meth)acrylate amidated by a polyamine, polyamine-alkenylsuccinimides, and derivatives of phthalamic acid and dimer fatty acid.

25. Composition according to any one of claims 17 to 24, in which the hydrocarbon cut has a sulphur content of less than or equal to 0.2%, preferably less than or equal to 0.05%, advantageously less than or equal to 0.01% by weight, based on the weight of the composition.

26. Composition according to any one of claims 17 to 25, which is a combustible or a fuel.

27. Process for the preparation of a composition according to any one of claims 17 to 26 by mixing its constituents.

## Patentansprüche

1. Polymer auf der Basis von Olefin und Alkenylalkylat mit einem Molekülgewicht im Bereich zwischen einschließlich 500 und 25.000 g.mol⁻¹ und umfassend mindestens ein Motiv der nachfolgenden Formel (I): 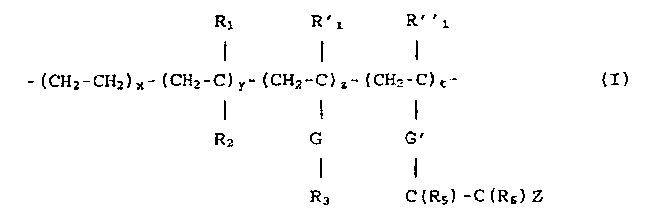 worin
R₁, R'₁ und R''₁, gleich oder verschieden, ausgewählt sind aus Wasserstoff und Alkylresten, die 1 bis 10 Kohlenstoffatome umfassen;
R₂ ausgewählt ist aus Wasserstoff, Alkylresten, die 1 bis 20 Kohlenstoffatome umfassen, aromatischen Resten, die 6 bis 10 Kohlenstoffatome aufweisen, der Gruppe OR'₂, wobei R'₂ Wasserstoff oder eine Alkylgruppe ist, die 1 bis 6 Kohlenstoffatome umfasst, wobei vorausgesetzt wird, dass R₁ und R₂ nicht gleichzeitig für ein Wasserstoffatom stehen können;
G und G', gleich oder verschieden, ausgewählt sind aus den Carbonylgruppen
-O-C(O)-; -C(O)-O-; -C(O)-;
R₃ ausgewählt ist aus Alkylresten, die 1 bis 13 Kohlenstoffatome umfassen;
R₅ und R₆, gleich oder verschieden, ausgewählt sind aus Wasserstoff, Alkylresten, die 1 bis 13 Kohlenstoffatome umfassen, oder gemeinsam eine Doppelbindung mit den beiden Kohlenstoffatomen bilden, an die sie gebunden sind, oder gemeinsam einen gesättigten oder ungesättigten Ring oder einen aromatischen Ring bilden, der 6 bis 10 Kohlenstoffatome aufweist, wobei der Ring gegebenenfalls mit 1 bis 3 Gruppe(n) substituiert ist, die die gleiche Definition aufweisen wie Z, die nicht Wasserstoff ist;
und Z für Wasserstoff steht; NO₂; NR₂, CONR₂, COO⁻⁺NH₂R₂ wobei jedes R unabhängig für einen Alkylrest steht, der 1 bis 24 Kohlenstoffatome umfasst; COOR, wobei R die vorgenannte Bedeutung aufweist; wobei vorausgesetzt wird, dass wenn Z für Wasserstoff steht, R₅ und R₆ dann gemeinsam einen gesättigten oder ungesättigten oder aromatischen Ring bilden, der gegebenenfalls substituiert ist;
x, y, z und t Molverhältnissen entsprechen, wie etwa:
die Summe x+y variiert von 0,60 bis 0,98, wobei x oder y null sein können,
z variiert von 0,004 bis 0,38, und
t so ist, dass 0,02 < t/z < 4.

2. Polymer nach Anspruch 1, umfassend mindestens ein Motiv der nachfolgenden Formel (II): 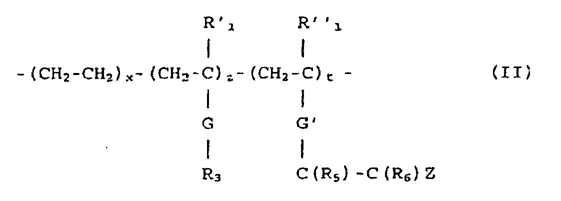 worin x von 0,6 bis 0,90 variiert und 0,02 < t/z < 4.

3. Polymer nach Anspruch 1 oder 2, worin die Gruppe G -O-C(O)- entspricht, und worin R₃ ausgewählt ist aus der Gruppe bestehend aus CH₃, C₂H₅, C₃H₇ und den Gruppen 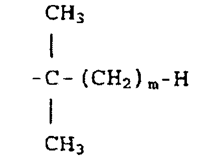 worin m von 1 bis 10 und bevorzugt von 1 bis 7 variiert.

4. Polymer nach einem der Ansprüche 1 bis 3, worin R₅ und R₆ gemeinsam einen gesättigten oder ungesättigten Ring bilden.

5. Polymer nach einem der Ansprüche 1 bis 3, worin die Gruppe G' -O-C(O)- entspricht, und worin R₅ und R₆ gemeinsam einen gesättigten oder ungesättigten Ring bilden.

6. Polymer nach Anspruch 5, worin R₅ und R₆ gemeinsam einen aromatischen Ring bilden.

7. Polymer nach einem der Ansprüche 1 bis 6, worin in der Gruppe G' -O-C(O)- entspricht, und worin Z für CONR₂ oder COO⁻⁺NH₂R₂ steht, wobei jedes R unabhängig für einen Alkylrest steht, der 2 bis 20 Kohlenstoffatome umfasst.

8. Polymer nach einem der Ansprüche 1 bis 7, worin R''₁ Wasserstoff ist und worin die Gruppe -G-R₃ ausgewählt ist aus der Gruppe umfassend Acetat-, Propionat-, Butyrat-, Isobutyrat-, Pivalat-, Pentanoat-, 2-Ethylhexanoat-, Octanoat-, Nonanoat-, Isononanoat-, Neononanoat-, Decanoat-, Isodecanoat-, Neodecanoat-, Undecanoat-, Neoundecanoat-, Dodecanoat-, Isododecanoat-, Neododecanoatreste.

9. Polymer nach einem der Ansprüche 1 bis 8, worin y gleich null ist.

10. Polymer nach einem der Ansprüche 1 bis 9 mit einem Molekülgewicht im Bereich zwischen einschließlich 1.000 und 15.000 g.mol⁻¹.

11. Verfahren zur Herstellung eines Polymers nach einem der Ansprüche 1 bis 10, umfassend die radikalische Polymerisation von Ausgangsmonomeren gemäß geeigneter Molverhältnisse.

12. Verfahren zur Herstellung eines Polymers nach einem der Ansprüche 1 bis 10, umfassend die beiden folgenden Hauptschritte:
- ein erster Schritt zur Herstellung eines funktionalisierten Polymers entweder durch direkte Synthese mittels Polymerisation mindestens eines Olefins und mindestens eines ungesättigten Monomers, das mindestens eine primäre Alkohol- oder Hydroxylfunktion trägt, oder durch indirekte Synthese, umfassend die Polymerisation mindestens eines Olefins und mindestens eines hydrolysierbaren ungesättigten Esters, gefolgt von einer teilweisen Hydrolyse der Esterfunktionen, um Alkohol- oder Hydroxylfunktionen freizusetzen; und
- ein zweiter Schritt der Veresterung der primären Alkohol- oder Hydroxylfunktionen des funktionalisierten Polymers, das im vorhergehenden Schritt erhalten wurde, mittels geeigneter Reagenzien.

13. Verfahren nach Anspruch 12, worin der zweite Schritt der Veresterung mittels Umsetzung mit einem Säurehalogenid ausgeführt wird.

14. Verfahren nach Anspruch 12, worin der zweite Schritt der Veresterung mittels Umsetzung mit einem Säureanhydrid ausgeführt wird, und gegebenenfalls der Modifikation der verbleibenden Carbonsäurefunktion.

15. Verfahren nach Anspruch 14, worin die Umsetzung mit dem Anhydrid in Gegenwart eines basischen Katalysators durchgeführt wird.

16. Verwendung eines Polymers nach einem der Ansprüche 1 bis 10 als multifunktionelles Additiv für Kälteverhalten und Antisedimentation von Kohlenwasserstoffen.

17. Zusammensetzung umfassend einen größeren Teil mindestens eines Kohlenwasserstoffschnitts, insbesondere der Gruppe bestehend aus Mitteldestillaten, Biokraftstoffen, synthetischen Dieselkraftstoffen, mit Wasser und/oder mit Wasser/Alkohol- oder Polyolgemischen emulgierten Treibstoffen, und deren Gemische, und einen kleineren Teil, umfassend mindestens ein Polymer nach einem der Ansprüche 1 bis 10.

18. Zusammensetzung nach Anspruch 17, **dadurch gekennzeichnet, dass** sie mindestens 25 ppm, bevorzugt 50 bis 5.000 ppm, vorteilhafterweise 75 bis 1.000 ppm des Polymers enthält.

19. Zusammensetzung nach einem der Ansprüche 17 bis 18, **dadurch gekennzeichnet, dass** sie ferner mindestens ein Filtrierbarkeitsadditiv enthält, ausgewählt aus Ethylen/Vinylacetat- (EVA), Ethylen/Vinylpropionat- (EVP), Ethylen/Vinylethanoat- (EVE), Ethylen/Methylmethacrylat-(EMMA), und Ethylen/Alkylfumaratpolymeren.

20. Zusammensetzung nach einem der Ansprüche 17 bis 19, **dadurch gekennzeichnet, dass** sie ferner mindestens ein Antischaumadditiv enthält, ausgewählt aus Polysiloxanen, oxalkylierten Polysiloxanen und Fettsäureamiden, die aus pflanzlichen oder tierischen Ölen stammen.

21. Zusammensetzung nach einem der Ansprüche 17 bis 20, **dadurch gekennzeichnet, dass** sie ferner mindestens ein Reinigungsadditiv enthält, ausgewählt aus der Gruppe bestehend aus Aminen, Succinimiden, Alkenylsuccinimiden, Polyalkylaminen, Polyalkylpolyaminen und Polyetheraminen.

22. Zusammensetzung nach einem der Ansprüche 17 bis 21, **dadurch gekennzeichnet, dass** sie ferner mindestens ein Schmier- oder Antiverschleißadditiv enthält, ausgewählt aus der Gruppe bestehend aus Fettsäuren und deren Derivaten Ester oder Amid, vor allem Glycerolmonooleat, und den mono- und polycyclischen Carbonsäurederivaten.

23. Zusammensetzung nach einem der Ansprüche 17 bis 22, **dadurch gekennzeichnet, dass** sie ferner mindestens ein Trübungspunktadditiv enthält, ausgewählt aus der Gruppe bestehend aus langkettigen Olefin/(Meth)acrylsäureester/Maleinimid-Terpolymeren, und Fumarsäureester/Maleinsäureester-Derivaten.

24. Zusammensetzung nach einem der Ansprüche 17 bis 23, **dadurch gekennzeichnet, dass** sie ferner mindestens ein Antisedimentationsadditiv enthält, ausgewählt aus der Gruppe bestehend aus Copolymeren aus (Meth)acrylsäure/Alkyl(meth)acrylat, amidiert mit einem Polyamin, Polyamin-Alkenylsuccinimiden, Phtalamidsäurederivaten und doppelkettigen Fettsäureaminderivaten.

25. Zusammensetzung nach einem der Ansprüche 17 bis 24, worin der Kohlenwasserstoffschnitt einen Schwefelgehalt kleiner oder gleich 0,2 Gew.-%, bevorzugt kleiner oder gleich 0,05 Gew.-%, vorteilhafterweise kleiner oder gleich 0,01 Gew.-%, bezogen auf das Gesamtgewicht der Zusammensetzung, aufweist.

26. Zusammensetzung nach einem der Ansprüche 17 bis 25, die ein Brennstoff oder ein Treibstoff ist.

27. Verfahren zur Fertigung einer Zusammensetzung nach einem der Ansprüche 17 bis 26 durch Mischen ihrer Bestandteile.
